**Europäisches Patentamt**

**European Patent Office**

**Office européen des brevets**

(19)

(11) Veröffentlichungsnummer : **0 019 066**
**B1**

(12) **EUROPÄISCHE PATENTSCHRIFT**

(45) Veröffentlichungstag der Patentschrift :
03.11.82

(51) Int. Cl.³ : **F 16 F 15/08, F 16 F 1/54**

(21) Anmeldenummer : 80101654.4

(22) Anmeldetag : 27.03.80

(54) **Dämpfungskörper für Maschinenlagerung.**

(30) Priorität : 18.05.79 CH 4654/79

(43) Veröffentlichungstag der Anmeldung :
26.11.80 (Patentblatt 80/24)

(45) Bekanntmachung des Hinweises auf die Patenterteilung : 03.11.82 Patentblatt 82/44

(84) Benannte Vertragsstaaten :
**BE DE FR IT LU NL SE**

(56) Entgegenhaltungen :
**CH A 313 630**
**DE A 1 904 668**
**DE A 1 914 608**
**DE A 2 441 882**
**DE B 1 077 922**
**FR A 1 073 318**
**GB A 1 032 679**
**US A 2 245 296**
**US A 2 706 112**

(73) Patentinhaber : **INVENTIO AG**
**Seestrasse 55**
**CH-6052 Hergiswil NW (CH)**

(72) Erfinder : **Keiser, Emil**
**Zentralstrasse 8**
**CH-6030 Ebikon (CH)**

Dämpfungskörper für Maschinenlagerung

Die Erfindung betrifft einen Dämpfungskörper für Maschinenlagerung, welcher mindestens teilweise aus schall- und schwingungsdämpfendem Material besteht und zwei parallele, sich gegenüberliegende Abstützflächen besitzt zur Abstützung des Maschinengrundrahmens bzw. Auflage auf einem Maschinensockel.

Es ist üblich, Dämpfungskörper zwischen den Maschinengrundrahmen und Maschinensockeln anzuordnen, um die durch die in Betrieb stehenden Maschinen verursachte Schall- und Schwingungsübertragung abzuschwächen. Solche Dämpfungsinstallationen sind eine absolute Notwendigkeit, wenn sich die betreffenden Maschinen im Innern von Wohn- oder öffentlichen Gebäuden befinden. So besteht z.B. für Aufzugsanlagen die Vorschrift, dass die im allgemeinen über dem letzten Stockwerk installierte Fördermaschine auf einem Grundrahmen bzw. einer Grundplatte, welche vom Auflagesockel durch aus Gummi oder anderem elastischem Dämpfungsmaterial bestehenden Trennelementen getrennt ist, befestigt werden muss, um so das Gebäude vor Schall und Schwingungen zu schützen. Die DE-OS 24 41 882 zeigt eine solche Anordnung von Trennelementen.

Diese Dämpfungskörper bestehen üblicherweise aus einteiligen, quaderförmigen, mindestens teilweise aus elastischem Dämpfungsmaterial gefertigten Elementen, welche unter dem Maschinengrundrahmen in unterschiedlicher Menge und Plazierung, je nach Gewichtsverteilung, angeordnet sind.

Es ist jedoch schwierig, mit solchen Dämpfungskörpern bei der Montage eine genaue Nivellierung des Maschinengrundrahmens, und dadurch der verschiedenen vom Rahmen getragenen Maschinenkomponente, zu erhalten. Daher ist es notwendig, entweder mehrere Dämpfungskörper verschiedener Grösse und Dicke anzuordnen, oder zwischen einzelnen Dämpfungskörpern und dem Rahmen, oder gegebenenfalls dem Sockel, eine oder mehrere Unterlagen anzubringen. Da die Unterlagen notwendigerweise relativ dünn sind, müssen sie aus Metall, oder einem anderen, jedoch beträchtlich härterem Material als dasjenige des Dämpfungskörpers, bestehen, damit sie in belastetem Zustand ihre ursprüngliche Dicke beibehalten und nicht zerdrückt und beschädigt werden. Die Anordnung von Dämpfungskörpern mit verschiedenen Dämpfungseigenschaften unter dem gleichen Rahmen ist ausserdem für die Erzielung einer gleichmässigen Abschwächung der schall- und Schwingungsübertragung wenig geeignet.

Der Erfindung liegt die Aufgabe zugrunde, einen relativ einfachen Dämpfungskörper für Maschinenlagerung vorzuschlagen, welcher eine genaue Nivellierung des Maschinengrundrahmens sowie eine gleichmässige Schall- und Schwingungsdämpfung erlaubt, ohne dass Dämpfungskörper verschiedener Grösse und Dicke verwendet oder Unterlagen hinzugefügt werden müssen.

Diese Aufgabe wird durch den in Anspruch 1 beanspruchten Dämpfungskörper gelöst. Vorteilhafte Ausführunsformen ergeben sich gemäss den Ansprüchen 2 bis 4.

Auf beiliegender Zeichnung sind zwei Ausführungsformen der Erfindung sowie Varianten dargestellt, welche im folgenden näher erläutert werden. Es zeigen :

Figur 1 eine Seitenansicht eines erfindungsgemässen Dämpfungskörpers in vereinfachter Ausführungsform ;

Figur 2 eine schematische Darstellung der Anordnung eines Maschinengrundrahmens auf seinem Sokkel mittels Dämpfungskörpern gemäss Figur 1 ;

Figuren 3 und 4 Ausführungsvarianten in Teilansicht des in Figur 1 dargestellten Dämpfungskörpers ;

Figur 5 einen Querschnitt eines Dämpfungskörpers gemäss einer weiteren Ausführungsform.

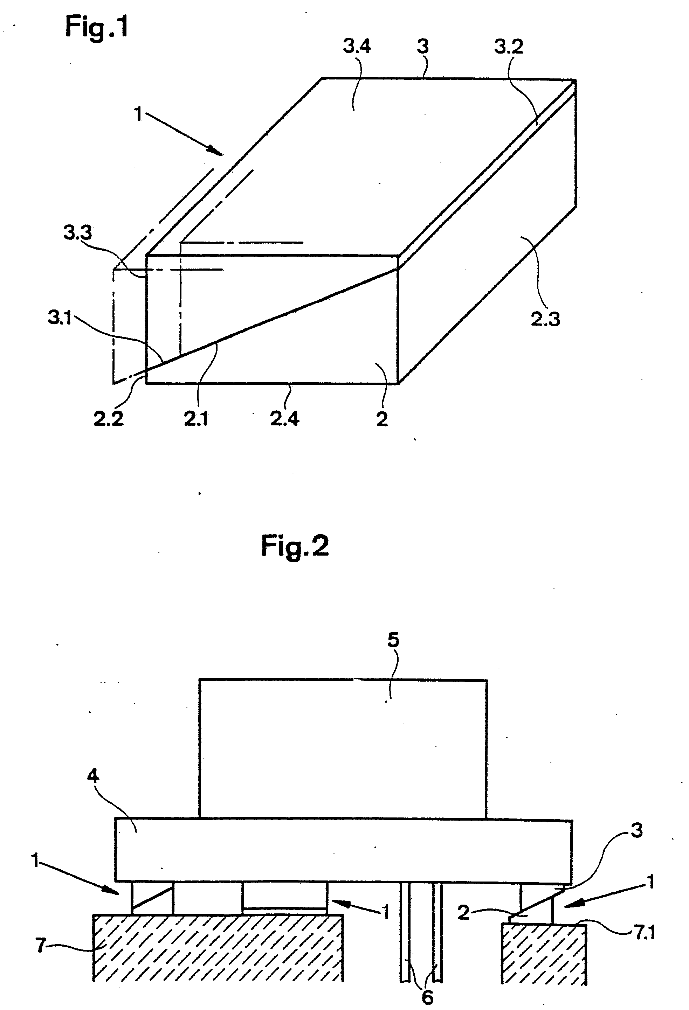

Der in Figur 1 gezeigte Dämpfungskörper 1 besteht aus zwei keilförmigen, hexaedrischen, in Grösse und Form identischen Teilkörpern 2, 3. Jeder Teilkörper 2, 3 ist aus schall- und schwingungsdämpfendem Material, z. B. Gummi oder elastischem Kunststoff, gefertigt und weist auf seiner ganzen Länge ein rechtwinklig trapezförmiges, konstantes Profil auf. Die zu den seitlichen Flächen 2.2, 2.3 ; 3.2, 3.3 nicht orthogonalen Flächen 2.1, 3.1 der keilförmigen Körper 2, 3 sind übereinander angeordnet, wobei der obere Teilkörper 3 um 180° gegenüber dem unteren Teilkörper 2 gedreht ist. So bilden die zu den seitlichen Flächen 2.2, 2.3 ; 3.2, 3.3 orthogonalen Flächen 2.4, 3.4 der Teilkörper 2, 3 für den Dämpfungskörper 1 zwei parallele Abstützflächen zur Abstützung eines Maschinengrundrahmens bzw. Auflage auf einem Maschinensockel.

Durch diese Anordnung zweier keilförmiger Teilkörper 2, 3, deren zwei übereinander angeordnete, mit den Abstützflächen 2.4, 3.4 nicht parallelen Flächen 2.1, 3.1 die Trennflächen sind, bildet der Dämpfungskörper 1 ein Parallelepiped. Bei unbelastetem Zustand des Dämpfungskörpers 1 erlaubt eine relative Verschiebung in Querrichtung der beiden Teilkörper 2, 3 entlang der Trennflächen 2.1, 3.1 die Dicke des Dämpfungskörpers 1 zu verändern und ermöglicht so eine genaue Nivellierung des Maschinengrundrahmens bei dessen Installation auf einem Sockel.

Figur 2 zeigt schematisch die Anwendung solcher Dämpfungskörper in einer Aufzugsanlage. Die dem Antrieb der nicht weiter dargestellten Kabine mittels Förderseilen 6 dienende Fördermaschine 5 ist auf einem Metallrahmen 4 befestigt. Der Metallrahmen 4 ruht mittels mehrerer Dämpfungskörper 1 auf einem Betonsockel 7 im oberen Teil des Gebäudes. Aus der Figur geht hervor, dass eine leichte Niveaudifferenz des Sockelteils 7.1 durch die relative Verschiebung der beiden keilförmigen Teilkörper 2, 3 des betreffenden Dämpfungskörpers 1 ausgeglichen wurde.

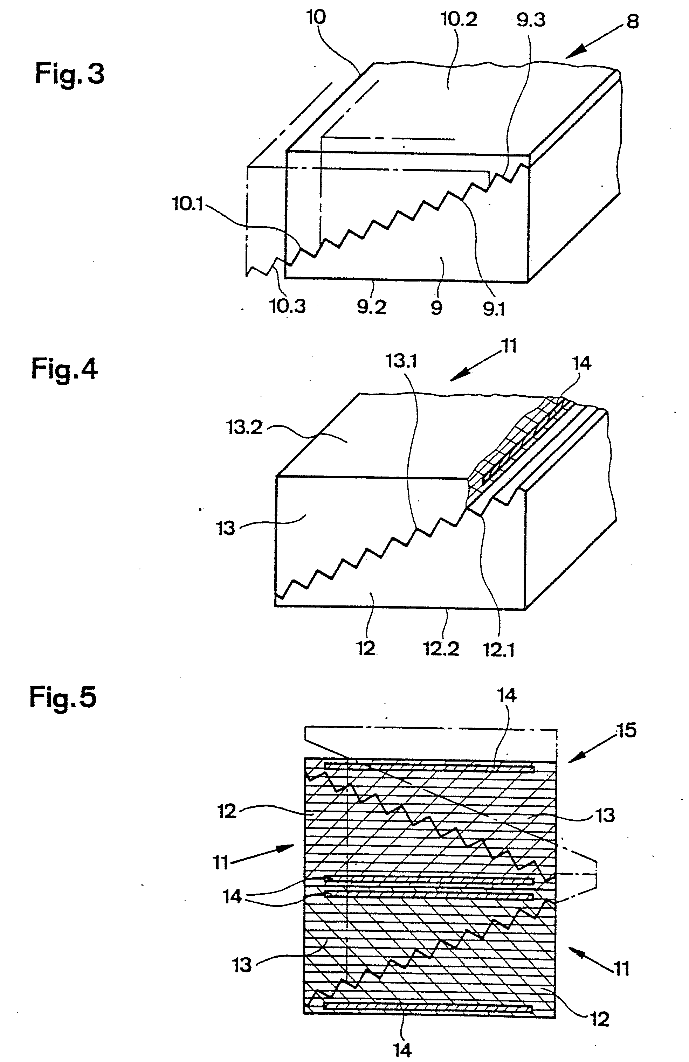

Bei der in der Figur 3 dargestellten Variante besteht der Dämpfungskörper 8 ebenfalls aus zwei keilförmigen Teilkörpern 9, 10, identisch in Grösse und Form mit denjenigen des Dämpfungskörpers 1 der Figur 1. Allerdings weist jede der zu den Abstützflächen 9.2, 10.2 nicht parallelen Trennflächen 9.1, 10.1 eine Reihe paralleler und äquidistanter V-förmiger Rippen 9.3, 10.3 auf, welche sich quer zur Verschieberichtung der Teilkörper 9, 10 erstrecken und so das formschlüssige Ineinandergreifen derselben ermöglichen.

Solche äquidistante Rippen, deren Teilung vorzugsweise klein, d.h. einige Millimeter, ist, erlauben nicht nur eine genaue und sichere Nivellierung beim Aufsetzen des Rahmens auf den Sockel, sondern sie vermeiden auch, insbesondere bei leichteren Maschinen, die Gefahr einer Relativverschiebung des Teilkörpers 9, 10, wenn der Dämpfungskörper 8 belastet ist.

In der Variante gemäss Figur 4 besitzen die beiden übereinander angeordneten Teilkörper 12, 13 eines Dämpfungskörpers 11 die gleichen Merkmale wie die Teilkörper 9, 10 des vorhergehenden Dämpfungskörpers 8, und ihre Trennflächen 12.1, 13.1 weisen ebenfalls V-förmige Rippen auf. In der Nähe der Abstützfläche 12.2, 13.2, und parallel zu derselben, ist jeder Teilkörper 12, 13 mit einer darin eingebauten Platte 14 aus Stahlblech versehen.

Diese im elastischen Dämpfungsmaterial eingebaute Metallplatte 14 gibt dem Teilkörper eine gewisse Starrheit. Ausserdem spielt sie die Rolle einer Reflexionsfläche, die den Körperschall dämmt bzw. reflektiert und dadurch eine gute Schallisolation ermöglicht.

Der in Figur 5 im Querschnitt dargestellte Dämpfungskörper 15 wird durch zwei übereinander angeordnete Dämpfungskörper 11 gebildet, welche, wie diejenigen in Figur 4, aus zwei mit V-förmigen Rippen und Metallplatten 14 versehenen Teilkörpern 12, 13 bestehen. Eine solche Anordnung bietet zwei Möglichkeiten, die Dicke des Dämpfungskörpers 15 einzustellen, was insbesondere im Falle des Ausgleichs von relativ grossen Niveaudifferenzen vorteilhaft ist. Wie Figur 5 zeigt, ist einer der beiden Dämpfungskörper 11 gegenüber dem anderen in der Horizontalebene um 180° gedreht, so dass bei der Einstellung auch die Möglichkeit besteht, nur die mittleren oder äusseren Teilkörper 12 bzw. 13 des Dämpfungskörpers 15 zu verschieben.

Ein mit der Erfindung erzielter Vorteil liegt insbesondere darin, dass die Benutzung einer einzigen Art keilförmiger Teilkörper erlaubt, identische, in der Dicke einstellbare Dämpfungskörper vorzusehen, mit welchen eine gleichmässige Einfederung, und damit eine gleiche Eigenfrequenz aller Auflagepunkte, für die getragenen Maschinengrundrahmen erreicht wird.

Obwohl aus Gründen der Herstellungskosten, Lagerung und Installation die Anwendung einer einzigen Art keilförmiger Teilkörper am günstigsten erscheint, können auch andere Ausführungsformen der Erfindung vorgesehen werden. Es ist z.B. möglich, Dämpfungskörper anzuwenden, welche zwei oder mehrere keilförmige Teilkörper besitzen, die unter sich verschiedene Profile und/oder Grössen aufweisen und ganz oder teilweise aus verschiedenem Material gefertigt sind. Die zwei mittleren Teilkörper 12, 13 des in Figur 5 dargestellten Dämpfungskörpers 15 könnten aus einem einzigen Teil, mit oder ohne Metallplatten 14, bestehen. Auch könnte jeder Dämpfungskörper ausser den keilförmigen Teilkörpern ein oder mehrere andere Elemente, z.B. quaderförmige, aufweisen, die auf dem Maschinensockel und/oder unter dem Maschinengrundrahmen oder zwischen keilförmigen Teilkörperpaaren angeordnet sind.

## Ansprüche

1. Dämpfungskörper (1) für Maschinenlagerung, welcher mindestens teilweise aus schall- und schwingungsdämpfendem Material besteht und zwei parallele, sich gegenüberliegende Abstützflächen (2.4, 3.4) besitzt zur Abstützung des Maschinengrundrahmens bzw. Auflage auf einem Maschinensockel, dadurch gekennzeichnet, dass er aus mindestens zwei durch mit den Abstützflächen (2.4, 3.4 ; 9.2, 10.2 ; 12.2, 13.2) nicht parallele Trennflächen (2.1, 3.1 ; 9.1, 10.1 ; 12.1, 13.1) voneinander getrennten keilförmigen Teilkörpern (2, 3 ; 9, 10 ; 12, 13) besteht, welche in unbelastetem Zustand entlang dieser Trennflächen (2.1, 3.1 ; 9.1, 10.1 ; 12.1, 13.1) relativ zueinander verschiebbar sind.

2. Dämpfungskörper nach Anspruch 1, dadurch gekennzeichnet, dass jede Trennfläche (9.1, 10.1 ; 12.1, 13.1) der keilförmigen Teilkörper (9, 10 ; 12, 13) quer zur Verschieberichtung parallele Rippen (9.3, 10.3) aufweist, mittels welcher die keilförmigen Teilkörper (9, 10 ; 12, 13) formschlüssig ineinander eingreifbar sind.

3. Dämpfungskörper nach Anspruch 1 oder 2, dadurch gekennzeichnet, dass mindestens einer der keilförmigen Teilkörper (12, 13) aus elastischem Dämpfungsmaterial besteht, in welchem eine Metallplatte (14) eingebaut ist.

4. Dämpfungskörper nach Anspruch 1 oder 2 oder 3, dadurch gekennzeichnet, dass die keilförmigen Teilkörper (2, 3 ; 9, 10 ; 12, 13) identisch in Form und Grösse sind.

## Claims

1. Damping body (1) for machine mounting, which consists at least partly of acoustically and vibrationally damping material and possesses two parallel, mutually opposite support surfaces (2.4, 3.4) for supporting the machine base-frame or seat on a machine pedestal, characterized in that it consists of at least two wedge-shaped partial bodies (2, 3 ; 9, 10 ; 12, 13) separated from one another by separating surfaces (2.1, 3.1 ; 9.1, 10.1 ; 12.1, 13.1) not parallel to the support surfaces (2.4, 3.4 ; 9.2, 10.2 ; 12.2, 13.2), which wedge-shaped partial bodies are slidable relative to one another in the unloaded state along these separating surfaces (2.1, 3.1 ; 9.1, 10.1 ; 12.1, 13.1).

2. Damping body according to claim 1, characterized in that each separating surface (9.1, 10.1 ; 12.1, 13.1) of the wedge-shaped partial bodies (9, 10 ; 12, 13) possesses parallel ribs (9.3, 10.3) transversely to the direction of displacement, by means of which the wedge-shaped partial bodies (9, 10 ; 12, 13) can be engaged form-fittingly into one another.

3. Damping body according to claim 1 or 2, characterized in that at least one of the wedge-shaped partial bodies (12, 13) is of elastic damping material, in which a metal plate (14) is incorporated.

4. Damping body according to any one of the claims 1 to 3, characterized in that the wedge-shaped partial bodies (2, 3 ; 9, 10 ; 12, 13) are identical in form and size.

**Revendications**

1. Corps amortisseur (1) pour mise en place de machine constitué au moins en partie de matériau amortissant le bruit et les vibrations et pourvu de deux surfaces d'appui opposées parallèles (2.4, 3.4) pour respectivement supporter le bâti de la machine et s'appuyer sur un socle de machine, caractérisé en ce qu'il est formé d'au moins deux corps partiels cunéiformes (2, 3 ; 9, 10 ; 12, 13) qui sont séparés l'un de l'autre par des surfaces de séparation (2.1, 3.1 ; 9.1, 10.1 ; 12.1, 13.1) non parallèles aux surfaces d'appui (2.4, 3.4 ; 9.2, 10.2 ; 12.2, 13.2) et qui, à l'état non chargé, sont déplaçables l'un par rapport à l'autre au long de ces surfaces de séparation (2.1, 3.1 ; 9.1, 10.1 ; 12.1, 13.1).

2. Corps amortisseur selon la revendication 1, caractérisé en ce que transversalement à la direction de déplacement les surfaces de séparation (9.1, 10.1 ; 12.1, 13.1) des corps partiels cunéiformes (9, 10 ; 12, 13) présentent chacune des nervures parallèles (9.3, 10.3) au moyen desquelles les corps partiels cunéiformes (9, 10 ; 12, 13) peuvent être engagés l'un dans l'autre par conjugaison de formes.

3. Corps amortisseur selon la revendication 1 ou la revendication 2, caractérisé en ce qu'au moins un des corps partiels cunéiformes (12, 13) est constitué d'un matériau d'amortissement élastique dans lequel est incorporée une plaque métallique (14).

4. Corps amortisseur selon l'une des revendications 1 à 3, caractérisé en ce que les corps partiels cunéiformes (2, 3 ; 9, 10 ; 12, 13) sont identiques en forme et en dimensions.

**Fig.1**

**Fig.2**

**Fig. 3**

10  10.2  9.3  8

10.1

10.3  9.2  9  9.1

**Fig. 4**

13.1  11  14

13.2

13

12  12.2  12.1

**Fig. 5**

14  15

12

13

11

14

14

13

11

12

14

2